# EUROPEAN PATENT SPECIFICATION

(11) **EP 2 638 644 B1**
(45) Date of publication and mention of the grant of the patent: **11.07.2018**
(21) Application number: 11839176.2
(22) Date of filing: 08.11.2011
(51) Int. Cl.: H04W 88/06, H04B 1/10, H04B 1/3805, H04J 11/00, H04B 1/525, H04W 72/02

(54) **METHOD AND APPARATUS OF HANDLING IN-DEVICE CO-EXISTENCE INTERFERENCE IN A MULTI-RADIO ENVIRONMENT**
VERFAHREN UND VORRICHTUNG ZUR HANDHABUNG GERÄTEINTERNER KOEXISTENZ-INTERFERENZEN IN EINER MEHRFUNKUMGEBUNG
PROCÉDÉ ET APPAREIL DE GESTION DU BROUILLAGE DÛ À LA COEXISTENCE INTERNE À UN DISPOSITIF DANS UN ENVIRONNEMENT MULTI-RADIO

(30) Priority: 08.11.2010 IN 3325CH2010
(43) Date of publication of application: 18.09.2013
(73) Proprietor: Samsung Electronics Co., Ltd., Gyeonggi-do 443-742 (KR)
(72) Inventor: GANAPATHI, Sarvesha Anegundi, Bangalore 560093 (IN); JAMADAGNI, Satish Nanjunda Swamy, Bangalore 560093 (IN)
(74) Representative: Nederlandsch Octrooibureau
(86) International application number: PCT/KR2011/008480
(87) International publication number: WO 2012/064093

(56) References cited:
- WO-A1-2011/123535
- US-A1- 2008 205 365
- US-A1- 2009 213 773
- US-A1- 2010 197 235
- SAMSUNG: "Understanding the nature of issues related with in-device coexistence", 3GPP DRAFT; R2-104329, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Madrid, Spain; 20100823, 17 August 2010 (2010-08-17), XP050451828, [retrieved on 2010-08-17]
- HUAWEI ET AL.: 'Consideration on the details of in-device interference' 3GPP TSG RAN WG2 MEETING #71BIS, R2-105587 11 October 2010,
- SAMSUNG: 'Possible TDM Solution for LTE, WiFi and BT In device Coexistence' 3GPP TSG RAN WG2 MEETING #71BIS, R2-105572 11 October 2010,
- ERICSSON ET AL.: 'Methods for in-device coexistence interference avoidance' 3GPP TSG RAN WG2 MEETING #71BIS, R2-105743 11 October 2010,
- SAMSUNG: 'Possible FDM solution for in-device coexistence interference mitigation' 3GPP TSG RAN WG2 MEETING #71BIS, R2-105573 11 October 2010,

## Description

### Technical Field

The present invention generally relates to the field of wireless communication systems, and more particularly relates to a method and apparatus of handling in-device co-existence in a multi-radio environment.

### Background Art

Coexistence of Long Term Evolution (LTE) with the industrial, scientific and medical (ISM) (Bluetooth®, Wi-Fi® and the like) band technologies and Global Navigation Satellite Systems (GNSS) is necessary to be provided as these are becoming very common combinations in user equipments (UEs) such as cell phones. Each of these technologies is developed by different group to serve a specific purpose. Characteristics of each of these technologies are different. They operate in different frequencies, have different access mechanism, have different frame structure, and peak transmit power.

### LTE coexistence with Bluetooth®

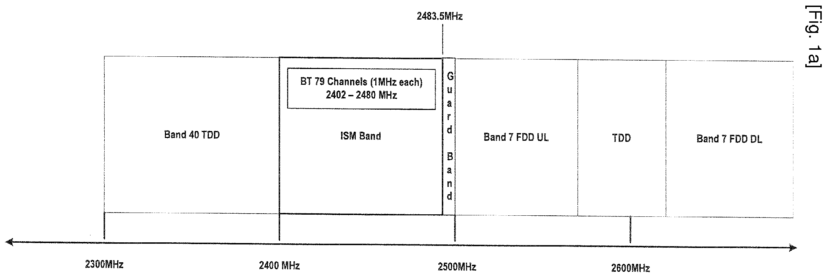

A LTE band 7 UL and Bluetooth® band are separated by 20 MHz frequency band. The band 7 is Frequency Division Duplexing (FDD) band and hence the LTE receiver is not affected by the Bluetooth® transmitter whereas the LTE transmitter can affect the Bluetooth® receiver. Also, there is very negligible separation of 2MHz between LTE band 40 (Time Division Duplexing (TDD) band) and the Bluetooth® frequency band. Therefore, it is not possible to discontinue using higher portion of LTE band 40 in case of coexistence. **Figure 1a** is a schematic diagram illustrating separation between LTE and Bluetooth® bands.

### LTE co-existence with Wireless Fidelity (Wi-Fi®)

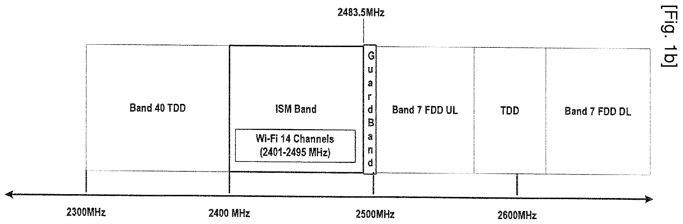

There are 14 channels demarcated in an ISM band for a Wi-Fi® operation. Each channel is separated from other channel by 5MHz with an exception of channel number 14 which is separated by 12 MHz. The channel 1 starts with 2401 MHz and hence there is almost no separation between LTE band 40 and Wi-Fi®. Channel 14 of Wi-Fi® ends at 2495 MHz so theoretically only 5 MHz separation is available between the LTE band 7 and the Wi-Fi®. Different countries have different policies for number of allowed channels of the Wi-Fi®. Currently, many countries allow only channel 1 to 13 whereas Japan allows usage of channel number 14 only for IEEE 802.11b based communication. This suggest even though in theory only 5 MHz separation is available between the Wi-Fi® and the LTE band 7 but in practice at least 17 MHz is available. **Figure 1b** is a schematic diagram illustrating separation between LTE and Wi-Fi® bands.

### LTE co-existence with Worldwide Interoperability for Microwave Access (WiMax®)

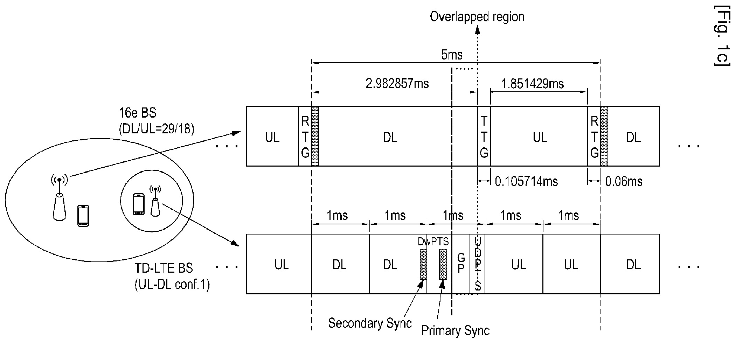

In-device co-existence interference can also exist between the LTE radio entity and the WiMax® radio entity when 10 Mhz is used for WiMax® communication and other 10 Mhz is used for LTE communication. As the two bands are different, possibility of in-device co-existence interference between the WiMax® radio entity and the LTE radio entity is low. However, in-device co-existence interference may arise due to leakage in a radio filter and practically per-sub-carrier side lobes may not fall relatively slowly. The co-existence of WiMax® radio entity with the LTE radio entity is shown in **Figure 1c****.** As can be seen from **Figure 1c****,** downlink part of the WiMax® radio entity overlaps with the uplink part of the LTE radio entity, resulting in high amount of interference despite maintaining synchronization between frame boundaries.

"Consideration on the details of in-device interference", Huawei et al, 3GPP draft, R2-105587, Mobile Competence Centre, 5 October 2010, discloses coexistence of Bluetooth and LTE services wherein an information mask mechanism is provided so that master can inform the slave about available transmission and reception opportunities while LTE is active and coexistence of Wi-Fi and LTE services wherein Wi-Fi can sense the channel and operate as and when is no interference. WO 2011/123535 A1 discloses in-device coexistence problems for a UE between LTE and ISM bands wherein a UE request timing schedules from an eNB that allow ISM services to be active during times when LTE communications are inactive.

### Disclosure of Invention

### Technical Problem

When all these technologies operate simultaneously in an adjacent band, (small separation e.g., < 20MHz) usually 50 decibels (dB) isolation is required. However, small form factor of the UE provides only 10-30 dB isolation. As a result, the transmitter of one radio severely affects the receiver of another radio. For example, a small form factor of the UE may pose great challenge of interference from transmission of ISM technology to the receiver of cellular technologies such as LTE or Worldwide Interoperability for Microwave Access (WiMax®). Similarly, the transmitter of cellular technology may cause severe interference to the ISM receiver. The main cause of in-device co-existence issues may be because of receiver blocking due to limited dynamic range of power amplifier, Analogue to Digital converter and out of band emission due to imperfect filtering.

### Solution to Problem

The present invention provides a method and apparatus of handling in-device co-existence interference in a multi-radio environment.

### Brief Description of Drawings

**Figure 1a** is a schematic diagram illustrating separation between a Long Term Evolution (LTE) band and a Bluetooth® band, in the context of the invention.
**Figure 1b** is a schematic diagram illustrating separation between the LTE band and a Wireless Fidelity (Wi-Fi® band, in the context of the invention.
**Figure 1c** is a schematic diagram illustrating separation between the LTE band and a Worldwide Interoperability for Microwave Access (WiMax® band, in the context of the invention.
**Figure 2** illustrates a block diagram of a wireless communication system for handling in-device co-existence interference between a LTE radio entity and an Industrial, Scientific and Medical (ISM) radio entity in user equipment, according to one embodiment.
**Figure 3** is a process flowchart illustrating an exemplary method of handling in-device co-existence interference between the LTE radio entity and the ISM radio entity, according to one embodiment.
**Figure 4** is a process flowchart illustrating an exemplary method of handling in-device co-existence interference between the LTE radio entity and the ISM radio entity, according to another embodiment.
**Figure 5** illustrates a block diagram of the coordinator showing various components for implementing embodiments of the present subject matter.

The drawings described herein are for illustration purposes only and are not intended to limit the scope of the present disclosure in any way.

### Best Mode for Carrying out the Invention

In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

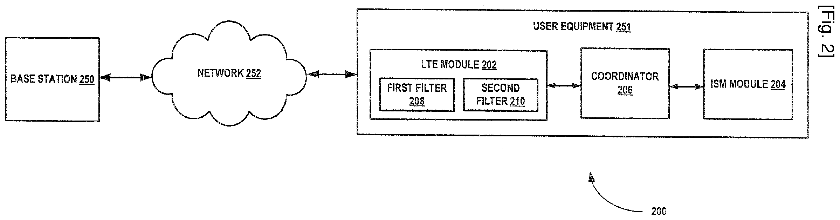

**Figure 2** illustrates a block diagram of a wireless communication system 200 for handling in-device co-existence interference between a LTE radio entity 202 and an ISM radio entity 204 in a user equipment (UE) 251, according to one embodiment. In **Figure 2****,** the wireless communication system 200 includes an evolved node B (eNB) 250 and a UE 251 connected via a wireless network (e.g., LTE network) 252. The UE 251 includes a LTE radio entity 202, an ISM radio entity 204, and a coordinator 206.

According to one embodiment, the coordinator 206 is configured for handling in-device co-existence interference between the LTE radio entity 202 and the ISM radio entity 204. In an exemplary operation, the eNB 250 communicates a scheduling gap pattern with LTE ON and OFF periods to the UE 251 so that the LTE radio entity 202 operates during the LTE ON period. Accordingly, the coordinator 206 configures the LTE radio entity 202 so that the LTE radio entity 202 performs data transmission/ reception during the LTE ON period (hereinafter referred to as an active state) and the ISM radio entity 204 can perform any ISM activity during the LTE OFF period (hereinafter referred to as inactive state). In such a case, the possibility of the LTE radio entity 202 causing interference to the ISM radio entity 204 or getting interfered by the ISM radio entity 204 is low. However, in-device co-existence interference may occur in the UE 251 when the ISM activity is ongoing on the ISM band and the LTE radio entity 202 is going to initiate an LTE activity on an LTE band. The in-device co-existence interference may also occur when the LTE activity is ongoing on the LTE band during the active state and the ISM radio entity 204 wishes to initiate an ISM activity on the ISM band.

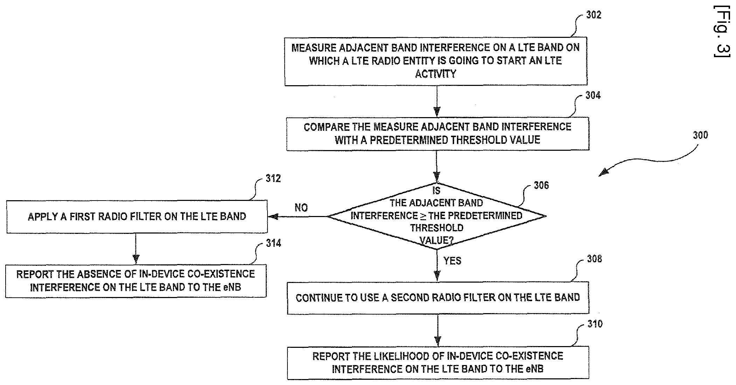

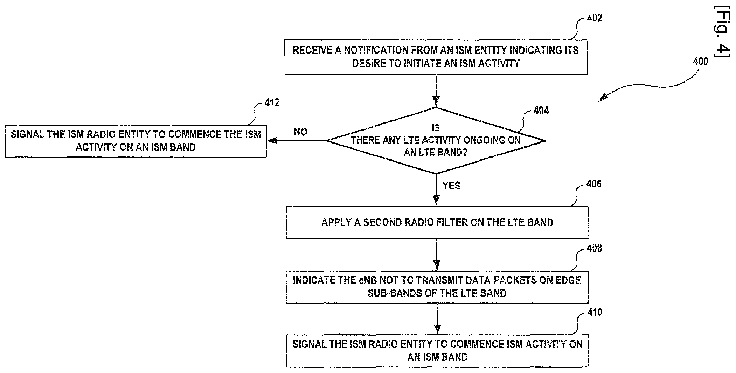

According to the present invention, the coordinator 206 is configured to handle such interference between the ISM radio entity 204 and the LTE radio entity 202 using the radio filters 208 and 210 in the LTE radio entity 202, where the first radio filter 208 is applied on the entire LTE band (e.g., entire 20MHz band) and the second radio filter 210 is applied on a partial LTE band with high attenuation at the edges of the LTE band. The radio filters 208 and 210 are applied appropriately on the LTE band based on the requirement. It is appreciated that, the radio filters 208 and 210 can be realized through hardware, software or combination of both. The process steps of handling in-device co-existence interference in the UE 251 by the coordinator 206 are described in greater detail in **Figures 3** and **4****.**

When the UE 251 includes a Worldwide Interoperability for Microwave Access (WiMax®) radio entity and the LTE radio entity 202, the coordinator 206 applies the second radio filter 210 to resolve in-device co-existence interference between the WiMax® radio entity and the LTE radio entity 202. By use of the second filter 210, the WiMAX® radio entity can perform data activity on central sub-bands in the overlapping region, thereby making optimal use of the frequency band. Alternatively, the in-device co-existence between the WiMax® radio entity and the LTE radio entity 202 can be resolved by avoiding transmission of data in DL in the overlapping region.

**Figure 3** is a process flowchart 300 illustrating an exemplary method of handling in-device co-existence interference between the LTE radio entity 202 and the ISM radio entity 204, according to one embodiment. In **Figure 3****,** the process steps 302-314 illustrate a method of handling in-device co-existence interference when the ISM activity is ongoing and the LTE radio entity 202 is going to commence an LTE activity on a LTE band.

At step 302, adjacent band interference is measured on the LTE band on which the LTE radio entity 202 is going to commence an LTE activity. The adjacent band interference is measured on the LTE band prior to switching the LTE radio entity to an active state from an inactive state. The adjacent band interference helps determine whether any interference exists on the LTE band. In other words, the adjacent band interference indicates that no ISM activity is ongoing on the ISM band when the LTE radio entity 202 transitions to the active state from the inactive state by measuring power levels on the LTE band.

At step 304, the adjacent band interference is compared with a predetermined threshold value to determine level of interference that may affect the operation of the LTE radio entity 202 during the active state. At step 306, it is determined whether the adjacent band interference is greater than or equal to the predetermined threshold value. If the adjacent band interference is greater than or equal to the predetermined threshold value, it implies that the ISM radio entity 204 is operating in the ISM band when the adjacent band interference was measured. If it is determined that the adjacent band interference is greater than or equal to the predetermined threshold value, then at step 308, the LTE radio entity 204 applies the second radio filter 210 on the LTE band. As the first radio filter 208 covers the entire LTE band, the adjacent band interference measured during the inactive state of the LTE radio entity 202 indicates the state of the ISM radio entity. If the adjacent band interference is greater than the predetermined threshold value, the LTE radio entity 202 applies the second radio filter 210 on the LTE band, else continues using the first radio filter 208. The second radio filter 210 covers the partial LTE band with high attenuation at the edges of the LTE band and eliminates high interference and subsequent radio blocking when the ISM band is simultaneously operating in the ISM band.

At step 310, the likelihood of in-device co-existence interference on the LTE band is reported to the eNB 250. In an exemplary implementation, the in-device co-existence interference is reported to the eNB 250 in a Layer 2/Layer 3 signaling message. The signaling message indicates that the ISM radio entity 204 is operating on the ISM band and also indicates that the second radio filter 210 is applied on the LTE band due to the presence of adjacent band interference. Additionally, the signaling message may indicate the eNB 250 not to transmit data packets on edge sub-bands of the LTE band since the ISM activity is ongoing. This may avoid causing interference between the LTE radio entity 202 and the ISM radio entity 204. For example, the signaling message can be a RRC connection request message, a RRC connection setup complete message or a RRC connection reconfiguration complete message.

If, at step 306, it is determined that the adjacent band interference is less than the predetermined threshold value, it implies that the ISM radio entity 204 is not operating in the ISM band when the adjacent band interference was measured. In such case, the first radio filter 208 is applied on the entire LTE band, at step 312. At step 314, absence of in-device co-existence interference on the LTE band is reported to the eNB 250. In an exemplary implementation, the absence of in-device co-existence interference is reported to the eNB 250 in a Layer 2/Layer 3 signaling message. The signaling message indicates that the ISM radio entity 204 is not operating on the ISM band and also indicates that the first radio filter 208 is applied on the LTE band due to the absence of in-device co-existence interference. Additionally, the signaling message may indicate the eNB 250 to transmit data packets on edge sub-bands of the LTE band since the ISM radio entity is not operational. For example, the signaling message can be a RRC connection request message, a RRC connection setup complete message or a RRC connection reconfiguration complete message.

**Figure 4** is a process flowchart 400 illustrating an exemplary method of handling in-device co-existence interference between the LTE radio entity 202 and the ISM radio entity 204, according to another embodiment. In **Figure 4****,** the process steps illustrate a method of handling in-device co-existence interference when the LTE activity is ongoing and the ISM radio entity 204 is going to commence an ISM activity on an ISM band.

When the ISM radio entity 204 desires to commence an ISM activity on an ISM band while the LTE activity is ongoing, a notification is received from the ISM radio entity 204 indicating its desire to initiate an ISM activity on the ISM band, at step 402. At step 404, it is determined whether any LTE activity is ongoing on the LTE band during an active state of the LTE radio entity 202. If there is any ongoing LTE activity, then at step 406, the second radio filter 210 is applied on the LTE band. At step 408, the eNB 250 is indicated not to transmit data packets on edge sub-bands of the LTE band during the active state of the LTE radio entity 202. Also, the eNB 250 is signaled that the second radio filter 210 is applied on the LTE band during the active state. At step 410, the ISM radio entity 204 is signaled to commence the ISM activity on the ISM band during the active state of the LTE radio entity.

If there is no ongoing LTE activity, then at step 412, the ISM radio entity 204 is signaled to initiate the ISM activity on the ISM band. The above indication can be signaled to the ISM radio entity in a Layer 2/Layer 3 signaling message. For example, the above indication can be signaled in a medium access control (MAC) control element or buffer status reporting message.

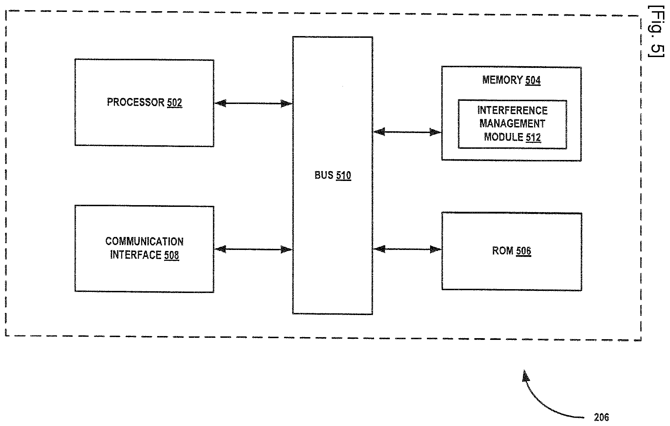

**Figure 5** illustrates a block diagram of the coordinator 206 showing various components for implementing embodiments of the present subject matter. In **Figure 5****,** the coordinator 206 includes a processor 502, memory 504, a read only memory (ROM) 506, a bus 508 and a communication interface 510.

The processor 502, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 502 may also include embedded controllers, such as generic or programmable logic devices or arrays, application specific integrated circuits, single-chip computers, smart cards, and the like.

The memory 504 may be volatile memory and non-volatile memory. The memory 504 includes an interference management module 512 for handling in-device co-existence interference between the LTE radio entity 202 and the ISM radio entity 204, according to the embodiments illustrated in **Figures 2** through **4****.** A variety of computer-readable storage media may be stored in and accessed from the memory elements. Memory elements may include any suitable memory device(s) for storing data and machine-readable instructions, such as read only memory, random access memory, erasable programmable read only memory, electrically erasable programmable read only memory, hard drive, removable media drive for handling memory cards, Memory Sticks™, and the like.

Embodiments of the present subject matter may be implemented in conjunction with modules, including functions, procedures, data structures, and application programs, for performing tasks, or defining abstract data types or low-level hardware contexts. Machine-readable instructions stored on any of the above-mentioned storage media may be executable by the processor 502. For example, a computer program may include machine-readable instructions capable of handling in-device co-existence interference between the LTE radio entity 202 and the ISM radio entity 204, according to the teachings and herein described embodiments of the present subject matter. In one embodiment, the computer program may be included on a storage medium and loaded from the storage medium to a hard drive in the non-volatile memory.

The present embodiments have been described with reference to specific example embodiments, it will be evident that various modifications and changes may be made to these embodiments without departing from the broader scope of the various embodiments. Furthermore, the various devices, modules, selectors, estimators, and the like described herein may be enabled and operated using hardware circuitry, for example, complementary metal oxide semiconductor based logic circuitry, firmware, software and/or any combination of hardware, firmware, and/or software embodied in a machine readable medium. For example, the various electrical structure and methods may be embodied using transistors, logic gates, and electrical circuits, such as application specific integrated circuit.

## Claims

1. A method of handling in-device co-existence interference in a user equipment (251) having multiple radio entities, the method comprising:
measuring (302) an adjacent band interference on a long term evolution (LTE) band associated with a LTE radio entity prior to switching the LTE radio entity to an active state from an inactive state;
comparing (304) a value of the adjacent band interference with a predetermined threshold value;
applying (308, 312) a filter among a first radio filter and a second radio filter to the LTE band based on a result of the comparing of the adjacent band interference value with the predetermined threshold value; and
reporting information related to in-device co-existence interference on the LTE band to an evolved node B based on the outcome of comparing of the adjacent band interference value with the predetermined threshold value.

2. The method of claim 1, wherein comparing the value of the adjacent band interference with the predetermined threshold value comprises:
determining (306) whether the value of the adjacent band interference is greater than or equal to the predetermined threshold value;
if the value of the adjacent band interference is greater than or equal to the predetermined threshold value, sending (310) an indication to the evolved node B that an industrial, scientific, and medical (ISM) radio entity is operating in an ISM band; and
if the value of the adjacent band interference is less than the predetermined threshold value, sending (314) an indication to the evolved node B that the ISM radio entity is not operating in the ISM band.

3. The method of claim 2, wherein sending the indication to the evolved node B that the ISM radio entity is not operating in the ISM band comprises:
sending an indication to transmit data packets on edge sub bands of the LTE band.

4. The method of claim 3, wherein sending the indication to the evolved node B that the ISM radio entity is operating in the ISM band comprises:
prohibiting data packets transmission of the evolved node B on edge sub bands of the LTE band.

5. The method of claim 1,
wherein applying the filter comprises applying (312) the first radio filter on the LTE band by the LTE radio entity if the adjacent band interference value is less than the predetermined threshold value, and
the method further comprises indicating to the evolved node B that the first radio filter is applied on the LTE band.

6. The method of claim 1,
wherein applying the filter comprises applying (308) the second radio filter on the LTE band by the LTE radio entity if the adjacent band interference value is greater than or equal to the predetermined threshold value; and
the method further comprises indicating to the evolved node B that the second radio filter is applied on the LTE band.

7. An apparatus comprising a processor (502) and a memory (504) coupled to the processor, wherein the memory comprises an interference management module (512), adapted to perform the method of one of claims 1 to 6.

## Patentansprüche

1. Verfahren des Behandelns geräteinterner Coexistenzstörung in einer Benutzerausrüstung (251), die mehrere Funkeinheiten aufweist, wobei das Verfahren Folgendes umfasst:
Messen (302) einer Nachbarbandstörung auf einem Long-Term-Evolution-Band (LTE-Band), das einer LTE-Funkeinheit zugeordnet ist, vor dem Umschalten der LTE-Funkeinheit von einem inaktiven Zustand in einen aktiven Zustand;
Vergleichen (304) eines Wertes der Nachbarbandstörung mit einem vorgegebenen Schwellwert;
Anwenden (308, 312) eines Filters unter einem ersten Funkfilter und einem zweiten Funkfilter auf das LTE-Band basierend auf einem Ergebnis des Vergleichens des Nachbarbandstörungswertes mit dem vorgegebenen Schwellwert und
Melden von Informationen bezüglich geräteinterner Coexistenzstörung auf dem LTE-Band an einen Evolved Node B basierend auf dem Ausgang des Vergleichens des Nachbarbandstörungswertes mit dem vorgegebenen Schwellwert.

2. Verfahren nach Anspruch 1, wobei Vergleichen des Wertes der Nachbarbandstörung mit dem vorgegebenen Schwellwert Folgendes umfasst:
Ermitteln (306), ob der Wert der Nachbarbandstörung größer oder gleich dem vorgegebenen Schwellwert ist;
wenn der Wert der Nachbarbandstörung größer oder gleich dem vorgegebenen Schwellwert ist, Senden (310) eines Hinweises an den Evolved Node B, dass eine Industrie-Wissenschaft-Medizin-Funkeinheit, (Industrial, Scientific and Medical, ISM-Funkeinheit) in einem ISM-Band arbeitet; und
wenn der Wert der Nachbarbandstörung kleiner als der vorgegebene Schwellwert ist, Senden (314) eines Hinweises an den Evolved Node B, dass die ISM-Funkeinheit nicht im ISM-Band arbeitet.

3. Verfahren nach Anspruch 2, wobei Senden des Hinweises an den Evolved Node B, dass die ISM-Funkeinheit nicht im ISM-Band arbeitet, Folgendes umfasst:
Senden eines Hinweises, Datenpakete auf Randsubbändern des LTE-Bandes zu senden.

4. Verfahren nach Anspruch 3, wobei Senden des Hinweises an den Evolved Node B, dass die ISM-Funkeinheit im ISM-Band arbeitet, Folgendes umfasst:
Unterbinden von Datenpaketsendung des Evolved Node B auf Randsubbändern des LTE-Bandes.

5. Verfahren nach Anspruch 1,
wobei Anwenden des Filters Anwenden (312) des ersten Funkfilters auf das LTE-Band durch die LTE-Funkeinheit, wenn der Nachbarbandstörungswert kleiner als der vorgegebene Schwellwert ist, umfasst und
das Verfahren ferner Hinweisen des Evolved Node B darauf umfasst, dass das erste Funkfilter auf das LTE-Band angewandt wird.

6. Verfahren nach Anspruch 1,
wobei Anwenden des Filters Anwenden (308) des zweiten Funkfilters auf das LTE-Band durch die LTE-Funkeinheit, wenn der Nachbarbandstörungswert größer oder gleich dem vorgegebenen Schwellwert ist, umfasst und
das Verfahren ferner Hinweisen des Evolved Node B darauf umfasst, dass das zweite Funkfilter auf das LTE-Band angewandt wird.

7. Vorrichtung, die einen Prozessor (502) und einen Speicher (504), der mit dem Prozessor gekoppelt ist, umfasst, wobei der Speicher ein Störungsverwaltungsmodul (512) umfasst, das ausgelegt ist, das Verfahren nach einem der Ansprüche 1 bis 6 durchzuführen.

## Revendications

1. Procédé de gestion d'interférences de coexistence à l'intérieur d'un dispositif dans un équipement d'utilisateur (251) comprenant plusieurs entités radio, le procédé comprenant :
la mesure (302) d'une interférence de bande adjacente sur une bande d'évolution à long terme (LTE) associée à une entité radio LTE avant la commutation de l'entité radio LTE d'un état inactif à un état actif ;
la comparaison (304) d'une valeur de l'interférence de bande adjacente à une valeur de seuil prédéterminée ;
l'application (308, 312) d'un filtre parmi un premier filtre radio et un deuxième filtre radio à la bande LTE sur la base d'un résultat de la comparaison de la valeur d'interférence de bande adjacente à la valeur de seuil prédéterminée ; et
le rapport d'informations relatives à des interférences de coexistence à l'intérieur d'un dispositif sur la bande LTE à un noeud B évolué sur la base du résultat de la comparaison de la valeur d'interférence de bande adjacente à la valeur de seuil prédéterminée.

2. Procédé selon la revendication 1, dans lequel la comparaison de la valeur de l'interférence de bande adjacente à la valeur de seuil prédéterminée comprend :
la détermination (306) si la valeur de l'interférence de bande adjacente est supérieure ou égale à la valeur de seuil prédéterminée ;
si la valeur de l'interférence de bande adjacente est supérieure ou égale à la valeur de seuil prédéterminée, l'envoi (310) d'une indication au noeud B évolué qu'une entité radio industrielle, scientifique et médicale (ISM) est en fonctionnement dans une bande ISM ; et
si la valeur de l'interférence de bande adjacente est inférieure à la valeur de seuil prédéterminée, l'envoi (314) d'une indication au noeud B évolué que l'entité radio ISM n'est pas en fonctionnement dans la bande ISM.

3. Procédé selon la revendication 2, dans lequel l'envoi de l'indication au noeud B évolué que l'entité radio ISM n'est pas en fonctionnement dans la bande ISM comprend :
l'envoi d'une indication pour transmettre des paquets de données sur des sous-bandes de bord de la bande LTE.

4. Procédé selon la revendication 3, dans lequel l'envoi de l'indication au noeud B évolué que l'entité radio ISM est en fonctionnement dans la bande ISM comprend :
l'interdiction de la transmission de paquets de données du noeud B évolué sur des sous-bandes de bord de la bande LTE.

5. Procédé selon la revendication 1,
dans lequel l'application du filtre comprend l'application (312) du premier filtre radio sur la bande LTE par l'entité radio LTE si la valeur d'interférence de bande adjacente est inférieure à la valeur de seuil prédéterminée, et
le procédé comprend en outre l'indication, au noeud B évolué, que le premier filtre radio est appliqué sur la bande LTE.

6. Procédé selon la revendication 1,
dans lequel l'application du filtre comprend l'application (308) du deuxième filtre radio sur la bande LTE par l'entité radio LTE si la valeur d'interférence de bande adjacente est supérieure ou égale à la valeur de seuil prédéterminée ; et
le procédé comprend en outre l'indication, au noeud B évolué, que le deuxième filtre radio est appliqué sur la bande LTE.

7. Appareil comprenant un processeur (502) et une mémoire (504) couplée au processeur, dans lequel la mémoire comprend un module de gestion d'interférences (512), apte à effectuer le procédé selon l'une des revendications 1 à 6.
